# EUROPÄISCHE PATENTANMELDUNG

(11) **EP 4 223 114 A1**
(43) Veröffentlichungstag der Anmeldung: **09.08.2023**
(21) Anmeldenummer: 23155402.3
(22) Anmeldetag: 07.02.2023
(51) Int. Cl.: A01K 29/00

(54) **ANORDNUNG ZUR ERKENNUNG EINER ANOMALIE ODER EINER KRANKHEIT DES BEWEGUNGSAPPARATES EINES NUTZTIERES UND VERFAHREN ZUR ERFASSUNG VON EIGENSCHAFTEN DES BEWEGUNGSAPPARATES EINES NUTZTIERES**

(30) Priorität: 07.02.2022 DE 102022102736
(71) Anmelder: ITS Innovations- & Technologieservice GmbH & Co. KG, 01159 Dresden (DE)
(72) Erfinder: Scharff, Wolfram, 09627 Bobritzsch-Hilbersdorf OT Sohra (DE); Gläser, Markus, 09577 Niederwiesa (DE); Schmidt, Ruben, 09471 Königswalde (DE)
(74) Vertreter: Steiniger, Carmen

(57) **Zusammenfassung**

Die vorliegende Erfindung beinhaltet eine Anordnung zur Erkennung einer Anomalie oder einer Krankheit des Bewegungsapparates eines Nutztieres sowie ein entsprechendes Verfahren, wobei die Anordnung wenigstens eine, jeweils in einem Gehäuse befindliche und jeweils an einem Bein des Nutztieres befestigte oder befestigbare Sensoranordnung, die wenigstens einen zeitabhängig messenden Beschleunigungssensor und/oder Neigungssensor, eine Stromversorgungseinrichtung und ein Datenübertragungsmodul aufweist, und eine mit dem Datenübertragungsmodul gekoppelte Datenverarbeitungseinrichtung mit einem Beschleunigungs- und/oder Neigungswinkeldatenspeicher und einer Datenbank aufweist, in der vorbestimmte zeitabhängige Beschleunigungs- und/oder Neigungswinkeldatenverlaufskurven und/oder zeitabhängige Beschleunigungs- und/oder Neigungswinkeldifferenzverläufe vorbestimmten Zuständen des Bewegungsapparates von Nutztieren zugeordnet sind, wobei die Datenverarbeitungseinrichtung ein Differenzbildungsmodul zur Bildung von Beschleunigungs- und/oder Neigungswinkeldifferenzen zwischen aus aktuellen und früheren Beschleunigungs- und/oder Neigungswinkeldaten gebildeten Beschleunigungs- und/oder Neigungswinkeldatenverlaufskurven und ein Vergleichsmodul zum Vergleich der jeweils aktuellen Beschleunigungs- und/oder Neigungswinkeldatenverlaufskurve und/oder eines aus den Beschleunigungs- und/oder Neigungswinkeldifferenzen ermittelten zeitabhängigen Beschleunigungs- und/oder Neigungswinkeldifferenzverlaufes mit den Zuständen des Bewegungsapparates von Nutztieren aus der Datenbank aufweist.

## Beschreibung

Die vorliegende Erfindung betrifft eine Anordnung zur Erkennung einer Anomalie oder einer Krankheit des Bewegungsapparates eines Nutztieres und ein Verfahren zur Erfassung von Eigenschaften des Bewegungsapparates eines Nutztieres.

Die Erkennung von Anomalien, biologischen Zuständen und Krankheiten bei Tieren, insbesondere Nutztieren, ist von großer Bedeutung. Es sind eine Reihe von Geräten und Verfahren bekannt, solche Krankheiten oder Anomalien über einen Sensor am Tier zu bestimmen und die entsprechenden Daten an eine Auswertestation zu übertragen.

So gibt es Vorrichtungen und Verfahren, mit welchen beispielsweise eine Brunst eines Rindes erkannt werden kann.

Beispielsweise ist ein Brunstsensor bekannt, der in der Lage ist, das Verhalten der Tiere über Erschütterungen bzw. die Bewegungsintensität zu messen, welche wiederum ein Maß für die Brunst ist, dabei eine Bewegungsfrequenz darzustellen und auszuwerten. Solch ein Brunstsensor beruht vorzugsweise auf einem Kontaktsensor, bei welchem sich eine Kugel in einer kleinen Röhre bewegt und bei jeder Bewegung entsprechende Kontaktimpulse erzeugt, die übertragen und ausgewertet werden. Damit kann über die Auswertung der Kontaktfrequenzen auf eine Brunst, bei der relativ hohe bzw. kritische Frequenzen auftreten, bzw. auch auf das Verhalten des Tieres bis hin zu dessen Essgewohnheiten geschlossen werden.

Ferner ist aus der Druckschrift WO 2016/086248 A1 ein Verfahren für das Gewinnen von Informationen über ein Nutztier bekannt, bei dem am Kopfbereich, wie einem Ohr, des Nutztieres ein Gerät angebracht ist, welches mindestens einen Beschleunigungssensor beinhaltet, durch den wiederkehrend Beschleunigungsdaten gemessen werden, die dahingehend ausgewertet werden, Schluckvorgänge, die das Nutztier durchführt, zu erkennen. Die Auswertung der Taktfrequenz der Schluckvorgänge erlaubt Aussagen über die aufgenommene Futtermenge, die Futterkomponenten, die Milchleistung, die Brunstzeit, einen optimalen Besamungszeitpunkt oder die Wiederkäutätigkeit.

Wichtig ist es auch, Klauenkrankheiten oder Beinanomalien, unter anderem bei Rindern, zu erkennen.

So kann beispielsweise über die Messung der Rückenkrümmung auf entsprechende Geh-Anomalitäten bzw. Bewegungs-Anomalitäten geschlossen werden, wodurch beispielsweise Klauenkrankheiten detektiert werden können.

Die optische Messung von Veränderungen der Rückenform ist jedoch sehr kompliziert in der Auswertung und oft stark fehlerbehaftet.

Die Druckschrift WO 2017/103239 A1 beschreibt eine im Magen eines Nutztieres dauerhaft verbleibende Vorrichtung zur Erfassung des Magendrucks, der Magentemperatur, der Magenmotilität und der Bewegung eines Wiederkäuers. Die Vorrichtung beinhaltet u.a. einen Drucksensor und einen auch im Magen integrierten Beschleunigungssensor, mit dem die Bewegung des Nutztieres unabhängig von etwaigen Fressbewegungen des Nutztieres erfassbar ist. Die Messdaten werden in einem in der Vorrichtung integrierten Speicher abgelegt und in festgelegten Intervallen oder auf Abruf an eine außerhalb des Nutztieres befindliche Basisstation übermittelt. Aus dem zeitlichen Verlauf der Messdaten des Nutztieres können Rückschlüsse auf dessen Gesundheitszustand gezogen werden. Zum Beispiel kann eine subakute Pansenazidose erkannt werden, die wiederum Auslöser von weiteren Krankheiten, wie der Klauenkrankheit, sein kann.

Mit dieser Vorrichtung wird also indirekt über die im Zusammenhang mit dem Fressen des Nutztieres ermittelbaren Werte auf eine Klauenkrankheit geschlossen. Da die Vorrichtung hierfür in das Nutztier eingesetzt werden muss und in diesem verbleibt, stellt sie nicht nur eine innere Belastung für das Nutztier dar, sondern ist auch zeitlebens des Nutztieres nicht mehr aus diesem entfernbar und kann damit weder bei Störungen repariert noch gewartet werden.

Es ist daher die Aufgabe der vorliegenden Erfindung, eine das jeweilige Nutztier nicht beeinträchtigende Anordnung zur Verfügung zu stellen, mit welchen mit erhöhter Sicherheit und nicht-invasiv Klauenkrankheiten oder Beinanomalien von Nutztieren bestimmt werden können. Ferner soll ein Verfahren bereitgestellt weren, mit dem mit hoher Sicherheit und nicht-invasiv Eigenschaften des Bewegungsapparates von Nutztieren erfasst werden können.

Erfindungsgemäß wird die Aufgabe zum einen durch eine Anordnung zur Erkennung einer Anomalie oder einer Krankheit des Bewegungsapparates eines Nutztieres gelöst, wobei die Anordnung wenigstens eine, jeweils in einem Gehäuse befindliche und jeweils an einem Bein des Nutztieres befestigbare oder befestigte Sensoranordnung, die wenigstens einen zeitabhängig messenden Beschleunigungssensor und/oder wenigstens einen zeitabhängig messenden Neigungssensor und eine Stromversorgungseinrichtung aufweist, und eine mit der wenigstens einen Sensoranordnung gekoppelte oder in dieser integrierte Datenverarbeitungseinrichtung mit einem Beschleunigungs- und/oder Neigungswinkeldatenspeicher und einer Datenbank aufweist, in der vorbestimmte zeitabhängige Beschleunigungs- und/oder Neigungswinkeldatenverlaufskurven und/oder zeitabhängige Beschleunigungs- und/oder Neigungswinkeldifferenzverläufe vorbestimmten Zuständen des Bewegungsapparates von Nutztieren zugeordnet sind, wobei die Datenverarbeitungseinrichtung ein Differenzbildungsmodul zur Bildung von Beschleunigungs- und/oder Neigungswinkeldifferenzen zwischen aus aktuellen und früheren Beschleunigungs- und/oder Neigungswinkeldaten gebildeten Beschleunigungs- und/oder Neigungswinkeldatenverlaufskurven und ein Vergleichsmodul zum Vergleich der jeweils aktuellen Beschleunigungs- und/oder Neigungswinkeldatenverlaufskurve und/oder eines aus den Beschleunigungs- und/oder Neigungswinkeldifferenzen ermittelten zeitabhängigen Beschleunigungs- und/oder Neigungswinkeldifferenzverlaufes mit den Zuständen des Bewegungsapparates von Nutztieren aus der Datenbank aufweist.

Die erfindungsgemäße Anordnung weist eine Sensoranordnung mit einem oder mehreren Beschleunigungssensor(en) und/oder Neigungssensor(en) auf, der bzw. die jeweils eine zeitabhängige Beschleunigung und/oder einen Neigungswinkel in mindestens einer Achse der Bewegungsstelle, an der der jeweilige Beschleunigungs- oder Neigungssensor angeordnet ist, zeitabhängig misst/messen.

Anstelle des wenigstens einen Beschleunigungssensors kann erfindungsgemäß auch wenigstens ein Drehratensensor oder eine räumliche Kombination aus wenigstens einem Beschleunigungssensor und wenigstens einem Drehratensensor in Form einer inertialen Messeinheit eingesetzt werden, wobei anstelle der oder zusätzlich zu den Beschleunigungsdaten entsprechend andere Messwerte, wie Drehraten, erfasst und verarbeitet werden.

Die wenigstens eine Sensoranordnung wird an einem Bein oder an mehreren Beinen des Nutztieres befestigt. Weist die wenigstens eine Sensoranordnung mehrere Beschleunigungssensoren und/oder Neigungssensoren auf, weist die erfindungsgemäße Anordnung vorzugsweise wenigstens zwei der Sensoranordnungen auf, deren Befestigung vorzugsweise an unterschiedlichen Beinen des Nutztieres erfolgt.

Die Datenverarbeitungseinrichtung kann ein separat von dem Nutztier befindlicher Computer sein, sie kann aber auch jeweils in der wenigstens einen Sensoranordnung integriert sein. Weist die erfindungsgemäße Anordnung im letzteren Fall mehr als eine der Sensoranordnungen auf, weist die erfindungsgemäße Anordnung entsprechend auch mehrere der Datenverarbeitungseinrichtungen auf.

In einer Ausführungsform der vorliegenden Erfindung, bei der die wenigstens eine Sensoranordnung mit der Datenverarbeitungseinrichtung gekoppelt ist, besitzt die wenigstens eine Sensoranordnung vorzugsweise jeweils ein Datenübertragungsmodul, das so ausgebildet ist, dass mit ihm Beschleunigungsdaten und/oder Neigungswinkeldaten an die Datenverarbeitungseinrichtung übertragbar sind. Da bei dieser Ausführungsform die Datenverarbeitungseinrichtung nicht in der wenigstens einen Sensoranordnung, also nicht direkt am Nutztier, vorgesehen ist, kann hier die wenigstens eine Sensoranordnung besonders klein und kompakt ausgebildet sein.

In einer anderen Ausführungsform der vorliegenden Erfindung ist die Datenverarbeitungseinrichtung in der wenigstens einen Sensoranordnung integriert. Um die von der wenigstens einen Sensoranordnung ermittelten Werte von außen erkennen zu können, weist die wenigstens eine Sensoranordnung bei dieser Ausführungsform der Erfindung vorzugsweise eine mit der internen Datenverarbeitungseinrichtung gekoppelte Anzeige, wie z. B. verschiedenfarbige Anzeigeleuchten, auf. Dabei kann beispielweise eine erste der Anzeigeleuchten aufleuchten, wenn ein Brunstverhalten des Nutztiers vorliegt oder vorliegen könnte. Eine zweite der Anzeigeleuchten kann aufleuchten, wenn beispielsweise eine Klauenkrankheit vorliegt oder vorliegen könnte. So kann ein Betreiber einer Nutztieranlage einfach sichttechnisch den jeweiligen Zustand des Nutztiers erkennen.

Die entsprechenden Farben der Leuchten können auch durch wenigstens eine in der Nutztieranlage installierte Kamera automatisch aufgenommen werden. Die jeweilige Anzeige kann dann in der Kamera gespeichert oder in ein anderes System, wie z. B. an einen Computer über Datenleitungen, Funk oder ein drahtloses Netz übertragen werden. Der Computer kann sich beispielsweise in einem Büro befinden. An ihm können die Ausleseergebnisse der Anzeige(n) der wenigstens einen Sensoranordnung angezeigt werden können und/oder in dem diese gespeichert und/oder weiterverarbeitet werden können. In der Kamera und/oder in dem Computer kann eine Software installiert sein, durch die beispielsweise die Farbe der durch die Kamera ausgelesenen Anzeigeleuchte einer Anomalie oder Krankheit des Nutztieres zugeordnet werden kann.

Dabei ist es von Vorteil, wenn an dem Nutztier ein das Nutztier identifizierender, ebenfalls durch die Kamera auslesbarer RFID-Chip angeordnet ist. Ein solcher RFID-Chip kann beispielsweise an einem Halsband des Nutztieres befestigt sein. Liest die Kamera die Anzeige der Sensoranordnung aus, kann sie durch zusätzliches Auslesen des RFID-Chips eine eindeutige Zuordnung der Sensormessdaten zu einem bestimmten Nutztier treffen und diese Datenkombination speichern und/oder an den Computer weiterleiten.

Des Weiteren ist es möglich, die von der wenigstens einen Sensoranordnung erfassten Daten und die Daten des RFID-Chips beim Durchgang des jeweiligen Nutztieres zu einer Melkeinrichtung über RFID mittels Computer auszulesen.

Mit der wenigstens einen Sensoranordnung steht eine kompakte Sensoreinheit zur Verfügung, welche die gemessenen zeitabhängigen Beschleunigungsdaten und/oder Neigungswinkel an die Datenverarbeitungseinrichtung zur Verarbeitung sendet oder intern in der Datenverarbeitungseinrichtung verarbeitet. Es ist möglich, diese Datenverarbeitungseinrichtung auch später mit neuen Auswertealgorithmen und Datenbankinhalten, beispielsweise auf der Basis der von dem oder den vorhandenen Beschleunigungssensor(en) gemessenen Beschleunigungsdaten und/oder auf Basis der von dem oder den vorhandenen Neigungssensor(en) gemessenen Neigungswinkel, ständig zu erweitern und/oder zu spezifizieren.

Als Stromversorgungseinrichtung kann beispielsweise eine Batterie oder eine Solarzelle eingesetzt werden.

Die erfindungsgemäße Anordnung hat den Vorteil, dass sie besonders kompakt gestaltet werden kann. Zudem kann sie einfach am Nutztier befestigt werden und ist jederzeit von außen zugänglich, um sie geeignet überwachen, warten und, wenn nötig, austauschen oder reparieren zu können.

In einer vorteilhaften Ausführungsform der erfindungsgemäßen Anordnung ist der wenigstens eine Beschleunigungssensor ein 3D-Beschleunigungssensor, der die zeitabhängige Beschleunigung in 1 bis 3 Achsen aufnimmt, oder der wenigstens eine Neigungssensor ein 3D-Neigungssensor, der dreidimensional, also in 1 bis 3 Achsen, Neigungswinkel erfasst.

Vorzugsweise misst der wenigstens eine Beschleunigungssensor Beschleunigungen in einem Bereich von ± 0,1 g bis ± 40 g, bevorzugt in einem Bereich von ± 0,1 g bis ± 16 g, mit einer Messauflösung in einem Bereich von 8 bis 24 Bit, beispielsweise von 16 Bit, jeweils in x- und/oder y- und/oder z-Achse. Die Messfrequenz des wenigstens einen Beschleunigungssensors liegt vorzugsweise in einem Bereich von 0,5 Hz bis 2.000 Hz. Bevorzugt beträgt die Messfrequenz des wenigstens einen Beschleunigungssensors 75 Hz.

Kommt bei der erfindungsgemäßen Anordnung wenigstens ein Neigungssensor zum Einsatz, weist dieser vorzugsweise einen Messbereich von 0° bis 90° und eine Messauflösung von wenigstens 0,1° auf. Auch der wenigstens eine Neigungssensor misst vorzugsweise mit einer Messfrequenz von 0,5 Hz bis 2.000 Hz.

In einer vorteilhaften Ausführungsform der Erfindung weist die Anordnung zwei der Sensoranordnungen auf, die zur Befestigung jeweils an gegenüberliegenden Beinen des Nutztieres vorgesehen sind. Bei dieser Ausführungsform werden also beispielsweise zwei Beschleunigungssensoren und/oder zwei Neigungssensoren und/oder in einer der Sensoranordnungen wenigstens ein Beschleunigungssensor und in der anderen der Sensoranordnungen wenigstens ein Neigungssensor verwendet, die jeweils an gegenüberliegenden Beinen des Nutztieres befestigt werden.

Es ist weiterhin möglich, in der jeweiligen Sensoranordnung für den 3D-Beschleunigungssensor einen Temperatursensor und/oder einen Schallsensor unterzubringen. Damit stehen weitere Messdaten zur Auswertung in der vorzugsweise an einem zentralen Messplatz vorgesehenen Datenverarbeitungseinrichtung zur Verfügung. Es ist zudem möglich, die jeweilige Sensoranordnung mit einem an dem Nutztier angebrachten RFID-Chip zur Tiererkennung zu verbinden bzw. zu koppeln.

Es können auch zusätzlich in der jeweiligen Sensoranordnung Sensoren eingesetzt werden, die die Drehgeschwindigkeit in zwei oder drei Raumrichtungen, ähnlich wie ein Gyroskop, erfassen. Damit können Bewegungsabläufe des Nutztieres generiert werden, insbesondere im Zusammenhang mit einem eingebauten Kompasssensor.

Diese Messdaten können sowohl für das Bewegungsprofil des Nutztieres genutzt werden. Durch eine Langzeitauswertung und einen Vergleich der gemessenen Daten kann auf eine Änderung der Essgewohnheiten, das Vorhandensein von Krankheitssymptomen, aber auch auf Klauenkrankheiten geschlossen werden.

Es ist möglich, dass die Sensoranordnung eine Stromversorgungsmanagementeinrichtung aufweist, die im Falle eines ruhenden Nutztieres die jeweilige Sensoranordnung in einen Stand-by-Modus umschaltet, um Batterie- bzw. Akkuleistung zu sparen. Dies kann statisch, das heißt, fest programmiert, z. B. als Tag-/Nachteinheit, oder dynamisch, wie z. B. fernprogrammiert, geschehen. Mit Hilfe der Stromversorgungsmanagementeinrichtung ist es möglich, die Messfrequenz des wenigstens einen Beschleunigungssensors und/oder des wenigstens einen Neigungssensors zu variieren bzw. mit dem wenigstens einen Beschleunigungssensor und/oder dem wenigstens einen Neigungssensor in bestimmten Zeitintervallen zu messen, sodass Energie gespart werden kann.

Die Aufgabe wird ferner erfindungsgemäß durch ein Verfahren zur Erfassung von Eigenschaften des Bewegungsapparates eines Nutztieres gelöst, wobei wenigstens eine jeweils in einem Gehäuse befindliche Sensoranordnung, die wenigstens einen Beschleunigungssensor und/oder wenigstens einen Neigungssensor und eine Stromversorgungseinrichtung aufweist, jeweils an einem Bein des Nutztieres befestigt wird, mit dem wenigstens einen Beschleunigungssensor zeitabhängig Beschleunigungsdaten gemessen werden und/oder mit dem wenigstens einen Neigungssensor zeitabhängig Neigungswinkeldaten gemessen werden, mit einer Datenverarbeitungseinrichtung aus dem zeitlichen Verlauf der gemessenen Beschleunigungs- und/oder Neigungswinkeldaten Beschleunigungsdaten- und/oder Neigungswinkeldatenverlaufskurven gebildet werden, aus aktuellen der Beschleunigungsdaten- und/oder Neigungswinkeldatenverlaufskurven und früheren der Beschleunigungsdaten- und/oder Neigungswinkeldatenverlaufskurven Beschleunigungs- und/oder Neigungswinkeldifferenzen gebildet werden, und eine jeweils aktuelle Beschleunigungsdaten- und/oder Neigungswinkeldatenverlaufskurve und/oder ein aus den Beschleunigungs- und/oder Neigungswinkeldifferenzen ermittelter zeitabhängiger Beschleunigungs- und/oder Neigungswinkeldifferenzverlauf mit in einer Datenbank abgelegten, vorbestimmten zeitabhängigen Beschleunigungsdaten- und/oder Neigungswinkeldatenverlaufskurven und/oder zeitabhängigen Beschleunigungs- und/oder Neigungswinkeldifferenzverläufen verglichen wird/werden.

Der wenigstens eine Beschleunigungssensor und/oder der wenigstens eine Neigungssensor misst/messen einen zeitabhängigen ein-, zwei- und/oder dreidimensionalen Beschleunigungs- und/oder Neigungswinkelverlauf an wenigstens einem Bein des Nutztieres.

Dabei werden durch den wenigstens einen Beschleunigungssensor und/oder den wenigstens einen Neigungssensor vorzugsweise kontinuierlich, also stetig und nicht nur in bestimmten Zeitintervallen, Beschleunigungs- und/oder Neigungswinkeldaten erfasst, sodass sich aus den erfassten Beschleunigungs- und/oder Neigungswinkeldaten jeweils eine Beschleunigungs- und/oder Neigungswinkeldatenmesskurve ergibt, aus der mathematisch die erste Ableitung bestimmbar ist. Man kann also unter einer solchen Beschleunigungs- und/oder Neigungswinkeldatenmesskurve eine Fläche bestimmen bzw. im Vergleich zwischen in zeitlichen Abständen ermittelten Beschleunigungs- und/oder Neigungswinkeldatenmesskurven durch Differenzbildung zwischen diesen Beschleunigungs- und/oder Neigungswinkeldatenmesskurven eine Differenzfläche bestimmen. Ferner lässt sich anhand der in zeitlichen Abständen ermittelten Beschleunigungs- und/oder Neigungswinkeldatenmesskurven eine Differenz der jeweiligen Amplitude der Beschleunigung und/oder des Neigungswinkels zu unterschiedlichen, vorgegebenen Zeitpunkten bestimmen.

Die gemessenen Beschleunigungs- und/oder Neigungswinkeldaten können an eine außerhalb des Nutztieres vorgesehene Datenverarbeitungseinrichtung, wie einen Computer, übertragen werden. An dieser werden die Daten mit Hilfe eines entsprechenden Algorithmus ausgewertet. Es ist jedoch auch möglich, dass die Datenverarbeitungseinrichtung in der Sensoranordnung integriert ist und intern die Datenauswertung vorgenommen wird.

Aus der zeitabhängigen Taktfrequenz des wenigstens einen Beschleunigungs- und/oder Neigungssensors kann - wie üblich - der Brunstzustand erkannt werden. Weiterhin wird der zeitabhängige Beschleunigungs- und/oder Neigungswinkeldatenverlauf gemessen und abgespeichert. Eine Änderung des zeitabhängigen Ablaufes der Beschleunigung und/oder des Neigungswinkels lässt beispielsweise auf eine Krankheit des Beins, wie eine Klauenkrankheit oder ähnliches, schließen.

Letzteres ist möglich, wenn eine jeweils aktuelle Beschleunigungs- und/oder Neigungswinkeldatenverlaufskurve und/oder ein aus den Beschleunigungs- und/oder Neigungswinkeldifferenzen ermittelter zeitabhängiger Beschleunigungs- und/oder Neigungswinkeldifferenzverlauf mit in der Datenbank abgelegten, vorbestimmten zeitabhängigen Beschleunigungs- und/oder Neigungswinkeldatenverlaufskurven und/oder zeitabhängigen Beschleunigungs- und/oder Neigungswinkeldifferenzverläufen, die vorbestimmten Zuständen des Bewegungsapparates von Nutztieren zugeordnet sind, verglichen wird/werden.

Dabei können die in der Datenbank gespeicherten vorbestimmten zeitabhängigen Beschleunigungs- und/oder Neigungswinkeldatenverlaufskurven und/oder zeitabhängigen Beschleunigungs- und/oder Neigungswinkeldifferenzverläufe auch entsprechende Beschleunigungs- und/oder Neigungswinkeldaten eines gesunden Nutztieres und/oder geben bestimmte Stadien eines Heilungsverlaufes an einem Nutztier umfassen.

Durch die Aufnahme der Beschleunigungs- und/oder Neigungswinkeldaten über einen längeren Zeitraum können deren Veränderungen erfasst werden, welche wiederum ausgewertet und dem Essverhalten, einem Krankheitsverlauf oder anderen Sachverhalten zugeordnet werden können.

In einer vorteilhaften Weiterbildung des erfindungsgemäßen Verfahrens werden von zwei der Sensoranordnungen an zwei unterschiedlichen Beinen des Nutztieres zeitabhängig Beschleunigungs- und/oder Neigungswinkeldaten gemessen, in der Datenverarbeitungseinrichtung aus dem zeitlichen Verlauf der gemessenen Beschleunigungs- und/oder Neigungswinkeldaten erste und zweite Beschleunigungs- und/oder Neigungswinkeldatenverlaufskurven gebildet, eine zeitabhängige Differenz zwischen der ersten und der zweiten Beschleunigungs- und/oder Neigungswinkeldatenverlaufskurve ermittelt und durch Vergleich des zeitlichen Verlaufes dieser zeitabhängigen Differenz mit einer früher ermittelten zeitabhängigen Differenz von ersten und zweiten Beschleunigungs- und/oder Neigungswinkeldatenverlaufskurven von an dem Nutztier gemessenen Beschleunigungs- und/oder Neigungswinkeldaten ein Zustand des Bewegungsapparates des Nutztieres bestimmt oder spezifiziert.

Bei dieser Weiterbildung des erfindungsgemäßen Verfahrens wird der zeitabhängige Verlauf der Beschleunigung und/oder des jeweiligen Neigungswinkels von zwei oder mehreren Beinen, üblicherweise zwei Beinen, bestimmt. Über einen Vergleich der zeitlichen Versetzung bzw. über eine Änderung des Differenzverhaltens der Beschleunigungs- und/oder Neigungswinkelkurven der beiden Beschleunigungs- und/oder Neigungssensoren kann auf eine Änderung des Gehverhaltens und somit auf Krankheiten, wie Klauenkrankheiten, geschlossen werden. Dabei können die Beschleunigungs- und/oder Neigungswinkelkurven der beiden Beschleunigungs- und/oder Neigungssensoren jeweils in x- und/oder y- und/oder z-Richtung ausgewertet werden.

In einer stromsparenden Variante des erfindungsgemäßen Verfahrens wird eine Messfrequenz des wenigstens einen Beschleunigungs- und/oder Neigungssensors in Abhängigkeit von den gemessenen Beschleunigungs- und/oder Neigungswinkeldaten variiert und/oder es erfolgen Messungen durch den wenigstens einen Beschleunigungs- und/oder Neigungssensor in zeitlichen Intervallen.

In einer vorteilhaften Ausführungsform des erfindungsgemäßen Verfahrens werden die Beschleunigungs- und/oder Neigungswinkeldaten über ein Datenübertragungsmodul der wenigstens einen Sensoranordnung an einen Computer übertragen, in diesem ausgewertet und auf einem Bildschirm des Computers Anomalitäten des Bewegungsablaufes des Nutztieres angezeigt.

Es ist jedoch auch möglich, dass die Datenverarbeitung der Beschleunigungs- und/oder Neigungswinkeldaten in einer in der jeweiligen Sensoranordnung befindlichen Datenverarbeitungseinrichtung ausgewertet werden und bei Vorliegen von Auswerteergebnissen, die auf eine Brunst oder eine Klauenkrankheit oder eine Beinanomalie des Nutztieres schließen lassen, wenigstens eine an der Sensoranordnung angeordnete Anzeigeleuchte mittels der Datenverarbeitungseinrichtung angesteuert, d. h. zum Leuchten gebracht, wird. Dabei können verschiedenfarbige Anzeigeleuchten zum Einsatz kommen, deren Farben unterschiedlichen Auswertungsergebnissen zugeordnet sind. Diese Anzeigeleuchten geben dem Bediener einer Nutztieranlage durch ihre jeweilige Farbe eine optische Information, die einem physischen Zustand des Nutztieres zugeordnet werden kann.

In einer bevorzugten Ausführungsform der Erfindung ist in der Nutztieranlage, in der sich das jeweilige Nutztier befindet, wenigstens eine Kamera angeordnet, mit der die wenigstens eine Anzeigeleuchte aufgenommen werden kann. Eine solche Kamera ist vorzugsweise dort angeordnet, wo die Nutztiere der Nutztieranlage öfter vorbeilaufen, wie beispielsweise an einem Melkstand. Mit der Kamera kann vorzugsweise auch ein an dem jeweiligen Nutztier angeordneter RFID-Chip ausgelesen und damit der durch die Leuchtenfarbe kenntlich gemachte Zustand des Nutztieres einem bestimmten Nutztier zugeordnet werden. Die jeweilige Leuchtenanzeige bzw. eine sich daraus ergebende Nutztierinformation kann dann nutztierbezogen in der Kamera gespeichert oder in ein anderes System, beispielsweise mittels RFID, übertragen werden.

Bevorzugte Ausführungsformen der vorliegenden Erfindung werden im Folgenden anhand von Figuren näher erläutert, wobei
- die Figuren 1 bis 3: schematisch unterschiedliche Ausführungsformen der erfindungsgemäßen Anordnung zur Erkennung einer Anomalie oder einer Krankheit des Bewegungsapparates eines Nutztieres zeigen;
- Figur 4: schematisch ein Nutztier und eine Ausführungsform einer erfindungsgemäßen Anordnung zur Erkennung einer Anomalie oder einer Krankheit des Bewegungsapparates des Nutztieres zeigt;
- Figur 5: schematisch ein Nutztier und eine weitere Ausführungsform einer erfindungsgemäßen Anordnung zur Erkennung einer Anomalie oder einer Krankheit des Bewegungsapparates des Nutztieres zeigt;
- Figur 6: schematisch mögliche Beschleunigungs- oder Neigungswinkeldatenverlaufskurven in einem normalen Zustand und in einem unnormalen Zustand des Nutztieres zeigen; und
- Figur 7: schematisch mögliche an zwei Beinen eines Nutztieres gemessene, erste und zweite Beschleunigungs- oder Neigungswinkeldatenverlaufskurven zeigen.

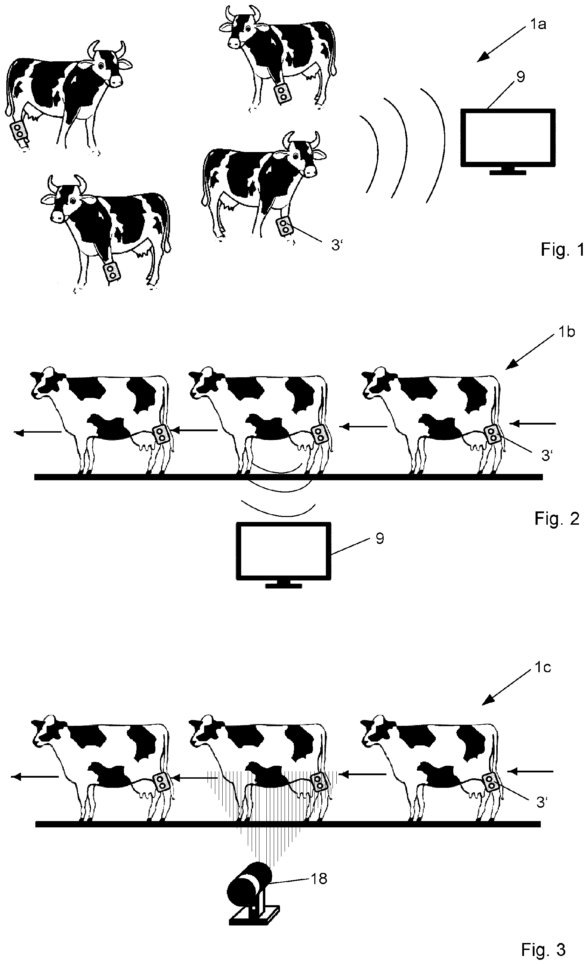

Die Figuren 1 bis 3 zeigen jeweils schematisch unterschiedliche Ausführungsformen von erfindungsgemäßen Anordnungen 1a, 1a', 1b, 1c, 1c' zur Erkennung einer Anomalie oder einer Krankheit des Bewegungsapparates eines Nutztieres 10. Die jeweiligen Anordnungen 1a, 1a', 1b, 1c, 1c' sind im Folgenden noch näher erläutert.

Die in den Figuren 1 bis 5 beispielhaft gezeigten Nutztiere 10, an welchen die jeweilige erfindungsgemäße Anordnung zum Einsatz kommt, sind Kühe. Die Erfindung kann auch an anderen Tieren, wie einem Pferd oder einem Kamel, zum Einsatz kommen.

An dem jeweiligen Nutztier 10 bzw. mit dem jeweiligen Nutztier 10 gekoppelt ist jeweils eine Ausführungsform der erfindungsgemäßen Anordnung 1a, 1a', 1b, 1c, 1c' zur Erkennung einer Anomalie oder einer Krankheit des Bewegungsapparates des Nutztieres 10 vorgesehen.

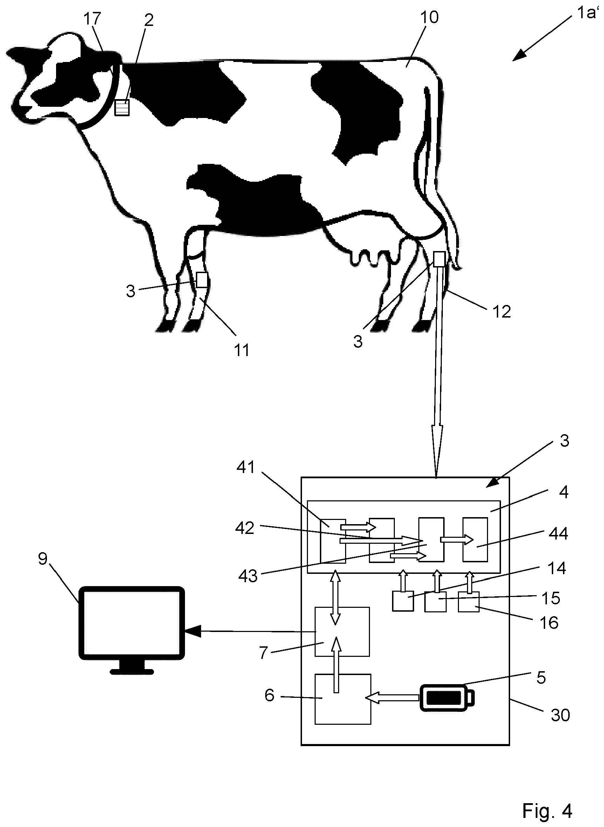

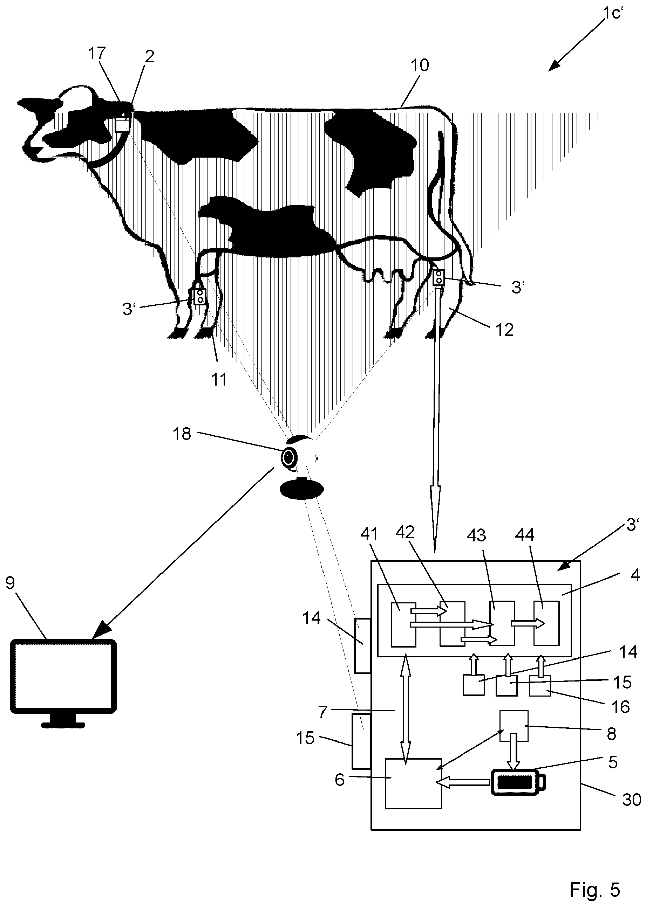

In den in den Figuren 4 und 5 dargestellten Ausführungsbeispielen weist die jeweilige Anordnung 1a', 1c' jeweils zwei Sensoranordnungen 3, 3' auf. Davon ist eine erste der Sensoranordnungen 3, 3' an einem Vorderbein 11 des Nutztieres 10 befestigt. Eine zweite der Sensoranordnungen 3, 3' ist an einem Hinterbein 12 des Nutztieres 10 befestigt.

Die Sensoranordnungen 3, 3' befinden sich jeweils in einem Gehäuse 30.

Wie es in den Figuren 1 bis 3 schematisch gezeigt ist, kann in anderen Ausführungsformen der vorliegenden Erfindung auch nur eine einzige Sensoranordnung 3 oder 3' an dem jeweiligen Nutztier 10 zum Einsatz kommen. Es können auch mehr als zwei der Sensoranordnungen 3, 3' an dem Nutztier 10 vorgesehen sein.

Jede der Sensoranordnungen 3, 3' weist einen Beschleunigungssensor 6 auf. In den gezeigten Ausführungsformen ist der jeweilige Beschleunigungssensor 6 ein dreidimensional Beschleunigungsdaten a erfassender Beschleunigungssensor, kann aber auch in anderen Ausführungsformen der Erfindung ein nur in einer Dimension Beschleunigungen messender Beschleunigungssensor sein. Die Sensoranordnungen 3, 3' können auch mehrere Beschleunigungssensoren 6 aufweisen.

In anderen Ausführungsformen der vorliegenden Erfindung kann anstelle des wenigstens einen Beschleunigungssensors 6 oder zusätzlich zu diesem wenigstens ein Neigungssensor zum Einsatz kommen. Der jeweilige Neigungssensor befindet sich dann in der jeweiligen Sensoranordnung 3, 3', die an einem Bein 11, 12 des Nutztieres 10, das von dem Nutztier 10 beim Laufen eingeknickt wird, befestigt wird, sodass an dem jeweiligen Bein 11, 12 Neigungswinkel gemessen werden können.

Ferner weist jede der Sensoranordnungen 3, 3' eine separate Stromversorgungseinrichtung 5, wie beispielsweise eine Batterie, auf. Die Stromversorgungseinrichtung 5 ist jeweils mit dem Beschleunigungssensor 6 der jeweiligen Sensoranordnung 3, 3' elektrisch verbunden.

In dem in Figur 5 gezeigten Ausführungsbeispiel weist zudem jede der Sensoranordnungen 3` eine Stromversorgungsmanagementeinrichtung 8 auf, die jeweils mit dem jeweiligen Beschleunigungssensor 6 und der Stromversorgungseinrichtung 5 verbunden ist. Die Stromversorgungsmanagementeinrichtung 8 ist eine analoge oder digitale Schaltung oder Steuerung, mit der die Messzyklen und damit die Stromaufnahme des jeweiligen Beschleunigungssensors 6 steuerbar sind. Wie es in Figur 4 gezeigt ist, kann in anderen Ausführungsformen der Erfindung die Stromversorgungsmanagementeinrichtung 8 auch weggelassen werden.

Darüber weist jede der erfindungsgemäßen Anordnungen 1a, 1a', 1b, 1c, 1c' wenigstens eine Datenverarbeitungseinrichtung 4 auf. In den in den Figuren 4 und 5 gezeigten Ausführungsformen ist die Datenverarbeitungseinrichtung 4 jeweils in den Sensoranordnungen 3, 3' integriert.

Die Datenverarbeitungseinrichtung 4 kann in einer anderen Ausführungsform der Erfindung zumindest teilweise auch zentral in einem separat von den Sensoranordnungen 3, 3' angeordneten Computer 9 vorgesehen sein. In diesem Fall weisen die Sensoranordnungen 3, 3' vorzugsweise jeweils ein Datenübertragungsmodul 7 auf, mit dem von dem Beschleunigungssensor 6 gemessene Beschleunigungsdaten und/oder mit einem Neigungssensor gemessene Neigungswinkeldaten an den Computer 9 übertragen werden.

Der Beschleunigungssensor 6 kann auch direkt mit der Datenverarbeitungseinrichtung 4 gekoppelt sein und somit direkt die von ihm gemessenen Beschleunigungsdaten an die Datenverarbeitungseirichtung 4 übermitteln.

Wie es in den Figuren 3 und 5 zu sehen ist, ist es auch möglich, dass die Datenverarbeitungseinrichtung 4 der jeweiligen Anordnung 1c, 1c' in einer Kamera 18 der Anordnung 1c, 1c' vorgesehen ist, mit der, wie in Figur 5 zu sehen, Anzeigeleuchten 14, 15 der jeweiligen Sensoranordnung(en) 3, 3' auslesbar sind.

Die Datenverarbeitungseinrichtung 4 beinhaltet jeweils einen Beschleunigungs- und/oder Neigungswinkeldatenspeicher 41, in dem die durch den jeweiligen Beschleunigungssensor 6 der Sensoranordnung 3, 3' gemessenen Beschleunigungsdaten und/oder die von einem Neigungssensor der Sensoranordnung 3, 3' gemessenen Neigungswinkeldaten gespeichert werden.

Die Datenverarbeitungseinrichtung 4 beinhaltet ferner jeweils eine Datenbank 42, in der vorbestimmte zeitabhängige Beschleunigungsdatenverlaufskurven und/oder vorbestimmte Beschleunigungsdifferenzverläufe gespeichert sind, die vorbestimmten Zuständen des Bewegungsapparates von Nutztieren, wie zum Beispiel Anomalien der Beine oder Klauenkrankheiten, zugeordnet sind.

Außerdem beinhaltet die Datenverarbeitungseinrichtung 4 ein Differenzbildungsmodul 43, in dem jeweils zwischen aktuellen und früheren Beschleunigungsdaten bzw. Beschleunigungsdatenverlaufskurven und/oder zwischen aktuellen und früheren Neigungswinkeldaten bzw. Neigungswinkeldatenverlaufskurven eine Differenz gebildet wird/werden bzw. die Änderung zwischen den aktuellen und früheren Beschleunigungsdaten bzw. Beschleunigungsdatenverlaufskurven und/oder zwischen den aktuellen und früheren Neigungswinkeldaten bzw. Neigungswinkeldatenverlaufskurven berechnet wird/werden. Die jeweilige zeitliche Differenz zwischen den Beschleunigungsdaten bzw. Beschleunigungsdatenverlaufskurven und/oder zwischen den Neigungswinkeldaten bzw. Neigungswinkeldatenverlaufskurven wird in der vorliegenden Erfindung der Einfachheit halber als Beschleunigungs- und/oder Neigungswinkeldifferenz bezeichnet.

Darüber hinaus beinhaltet die Datenverarbeitungseinrichtung 4 ein Vergleichsmodul 44, in dem eine jeweils aktuelle Beschleunigungsdatenverlaufskurve und/oder ein aus den Beschleunigungsdifferenzen ermittelter zeitabhängiger Beschleunigungsdifferenzverlauf und/oder eine jeweils aktuelle Neigungswinkeldatenverlaufskurve und/oder ein aus den Neigungswinkeldifferenzen ermittelter zeitabhängiger Neigungswinkeldifferenzverlauf mit den in der Datenbank 42 gespeicherten Zuständen des Bewegungsapparates von Nutztieren verglichen wird. Dieser Vergleich erfolgt vorzugsweise automatisch. Ferner kann infolge dieses Vergleiches eine Zuordnung der jeweils aktuellen Beschleunigungsdatenverlaufskurve und/oder des aus den Beschleunigungsdifferenzen ermittelten zeitabhängigen Beschleunigungsdifferenzverlaufes und/oder der jeweils aktuellen Neigungswinkeldatenverlaufskurve und/oder des aus den Neigungswinkeldifferenzen ermittelten zeitabhängigen Neigungswinkeldifferenzverlaufes zu einem der in der Datenbank 42 gespeicherten Zustände des Bewegungsapparates von Nutztieren vorgenommen werden. Diese Zuordnung erfolgt ebenfalls vorzugsweise automatisch.

In den in den Figuren 4 und 5 gezeigten Ausführungsformen weist jede der Sensoranordnungen 3, 3' ferner einen dreidimensional messenden Drehgeschwindigkeitssensor 14, einen Kompasssensor 15 und einen Temperatursensor 16 auf, welche direkt oder über das Datenübertragungsmodul 7 mit der Datenverarbeitungseinrichtung 4 gekoppelt sind. Von diesen Sensoren können jedoch in anderen Ausführungsformen der vorliegenden Erfindung auch einzelne oder alle weggelassen werden.

Das Nutztier 10 trägt ferner in den Anordnungen 1a' und 1c' einen RFID-Sensor 2, beispielsweise an seinem Halsband 17. Der RFID-Sensor 2 kann auch an einer anderen Position an dem Nutztier 10 vorgesehen sein. Der RFID-Sensor 2 ist mit wenigstens einer der Datenverarbeitungseinrichtungen 4, beispielsweise über Bluetooth oder Funk, verbunden.

In der in Figur 5 gezeigten Ausführungsform weisen die jeweiligen Sensoranordnungen 3` jeweils zwei Anzeigeleuchten 14, 15 auf. Die Anzeigeleuchten 14, 15 sind mit der Datenverarbeitungseinrichtung 4 der Sensoranordnung 3' gekoppelt. Die Anzeigeleuchten 14, 15 leuchten mit unterschiedlichen Farben, wie beispielsweise rot bzw. grün. Je nachdem, welchen Zustand des Nutztieres 10 die Datenverarbeitungseinrichtung 4 ermittelt hat, wird von ihr eine der Anzeigeleuchten 14, 15 angesteuert.

Die Anordnung 1c` weist ferner eine Kamera 18 auf, mit der die Anzeigeleuchten 14, 15 als auch der RFID-Chip 2 des Nutztieres 10 auslesbar sind. Die Kamera 18 ist mit einem Computer 9 gekoppelt, an dem der für das jeweilige Nutztier 10 ermittelte Zustand angezeigt werden kann.

Die Datenübertragung von der jeweiligen Sensoranordnung 3, 3` an datenerfassende und/oder datenverarbeitende und/oder datendarstellende Vorrichtungen der jeweiligen Anordnung 1a, 1a', 1b, 1c, 1c', wie einen Computer 9 oder eine Kamera 18, kann bei der vorliegenden Erfindung auf unterschiedliche Weise erfolgen. In der in Figur 1 gezeigten Anordnung 1a erfolgt eine drahtlose Übertragung der Daten von den Sensoranordnungen 3`, die jeweils an auf einer Weide befindlichen Nutztieren 10 befestigt sind, an einen Computer 9. In der in Figur 2 gezeigten Anordnung 1b erfolgt eine drahtlose Übertragung der Daten von den Sensoranordnungen 3' an einen Computer 9 in einem Melkstand. Für die jeweilige drahtlose Übertragung kann beispielsweise RFID, Funk oder WLAN eingesetzt werden. In der in Figur 3 gezeigten Anordnung 1c erfolgt eine optisch oder visuelle Kontrolle von auf Basis der erfassten Daten erzeugten optischen Signalen direkt an den an den jeweiligen Nutztieren 10 befestigten Sensoranordnungen 3', beispielsweise im Melkstand.

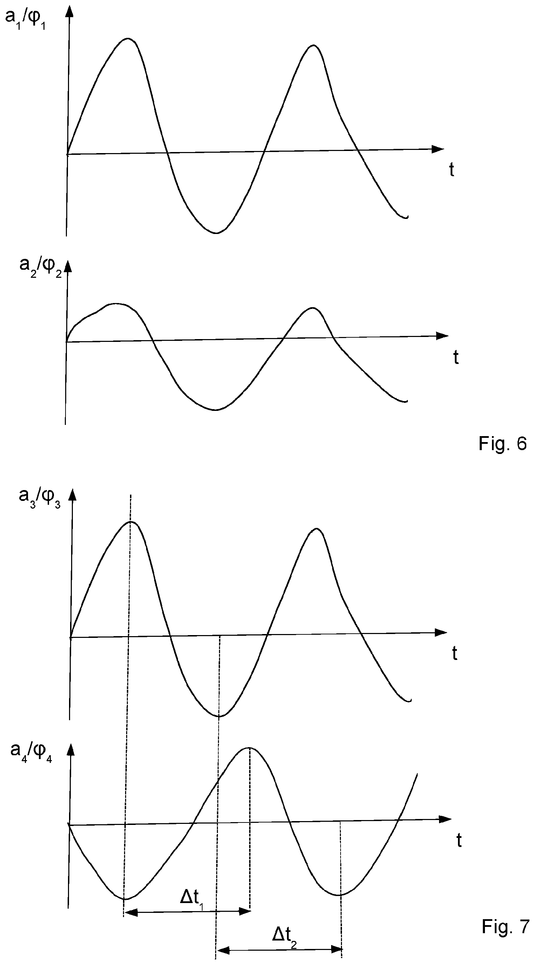

Die Figuren 6 und 7 zeigen schematisch, wie Änderungen der mit dem wenigstens einen Beschleunigungssensor 6 gemessenen Beschleunigungsdaten a oder mit einem Neigungssensor ermittelte Neigungswinkeldaten ϕ darstellbar sind und wie daraus letztendlich beispielsweise auf Klauenkrankheiten geschlossen werden kann.

Die obere Messkurve von Figur 6 zeigt schematisch beispielsweise an einem Bein 11 des Nutztieres 10 in einem ersten Zeitbereich gemessene Beschleunigungs- oder Neigungswinkeldaten a₁/ϕ₁ in Abhängigkeit von der Zeit t. Während der Aufnahme der Beschleunigungsdaten a₁ oder Neigungswinkeldaten ϕ₁ befindet sich das Nutztier 10 in einem normalen, gesunden Zustand. Die Beschleunigungs- oder Neigungswinkeldaten a₁/ϕ₁ werden in dem Beschleunigungs- und/oder Neigungswinkeldatenspeicher 41 abgelegt.

Die untere Messkurve von Figur 6 zeigt schematisch an dem gleichen Bein 11 des Nutztieres 10 in einem zweiten Zeitbereich gemessene Beschleunigungsdaten a₂ bzw. Neigungswinkeldaten ϕ₂ in Abhängigkeit von der Zeit t. Während der Aufnahme der Beschleunigungs- oder Neigungswinkeldaten a₂/ϕ₂ befindet sich das Nutztier 10 in einem unnormalen, gegebenenfalls ungesunden Zustand. Die Beschleunigungs- oder Neigungswinkeldaten a₂/ϕ₂ unterscheiden sich von den Beschleunigungs- oder Neigungswinkeldaten a₁/ϕ₁ beispielsweise in ihrer Höhe bzw. Amplitude und/oder ihrer Frequenz und/oder in ihrer Homogenität. Auch die Beschleunigungs- oder Neigungswinkeldaten a₂/ϕ₂ werden in dem Beschleunigungs- und/oder Neigungswinkeldatenspeicher 41 abgelegt.

Das Differenzbildungsmodul 43 der Datenverarbeitungseinrichtung 4 berechnet aus den Beschleunigungs- oder Neigungswinkeldaten a₂/ϕ₂ und den Beschleunigungs- oder Neigungswinkeldaten a₁/ϕ₁ deren Differenz. Der zeitliche Verlauf dieser Differenz spiegelt sich in entsprechenden Beschleunigungs- oder Neigungswinkeldifferenzen, die z. B. in Form von Beschleunigungs- oder Neigungswinkeldifferenzkurven erfasst werden, wider.

Mit dem Vergleichsmodul 44 der Datenverarbeitungseinrichtung 4 werden die Beschleunigungs- oder Neigungswinkeldifferenzen mit in der Datenbank 42 abgelegten Kurven verglichen, die bestimmten Zuständen des Bewegungsapparates von Nutztieren entsprechen. Daraus wird von der Datenverarbeitungseinrichtung 4 automatisch eine Zuordnung der jeweiligen Beschleunigungs- oder Neigungswinkeldifferenz zu einem bestimmten Zustand des Bewegungsapparates von Nutztieren getroffen, also der aktuelle Zustand des Bewegungsapparates des Nutztieres 10, an dem gerade gemessen wird, ermittelt.

Die obere Messkurve von Figur 7 zeigt schematisch beispielsweise an einem ersten Bein 11 eines Nutztieres 10 in einem Zeitbereich gemessene Beschleunigungs- oder Neigungswinkeldaten a₃/ϕ₃ in Abhängigkeit von der Zeit t. Die Beschleunigungs- oder Neigungswinkeldaten a₃/ϕ₃ werden in dem Beschleunigungs- und/oder Neigungswinkeldatenspeicher 41 abgelegt.

Die untere Messkurve von Figur 7 zeigt schematisch beispielsweise an einem zweiten Bein 12 des Nutztieres 10 in einem Zeitbereich gemessene Beschleunigungs- oder Neigungswinkeldaten a₄/ϕ₄ in Abhängigkeit von der Zeit t. Die Beschleunigungs- oder Neigungswinkeldaten a₄/ϕ₄ werden auch in dem Beschleunigungs- und/oder Neigungswinkeldatenspeicher 41 abgelegt.

Das Differenzbildungsmodul 43 der Datenverarbeitungseinrichtung 4 berechnet aus den Beschleunigungs- oder Neigungswinkeldaten a₄/ϕ₄ und den Beschleunigungs- oder Neigungswinkeldaten a₃/ϕ₃ deren Differenz und/oder deren zeitliche Verschiebung. Der zeitliche Verlauf dieser Differenz und/oder die ermittelte zeitliche Verschiebung spiegelt sich in entsprechenden Beschleunigungs- oder Neigungswinkeldifferenzen wider.

Mit dem Vergleichsmodul 44 der Datenverarbeitungseinrichtung 4 wird der zeitliche Verlauf der Beschleunigungs- oder Neigungswinkeldifferenzen mit in der Datenbank 42 abgelegten Beschleunigungs- oder Neigungswinkeldifferenzverläufen verglichen, die bestimmten Zuständen des Bewegungsapparates von Nutztieren entsprechen. Daraus wird von der Datenverarbeitungseinrichtung 4 automatisch festgestellt, ob eine Anomalie der Bewegungsabläufe an dem Nutztier 10 vorliegt. Das heißt, in dem gezeigten Ausführungsbeispiel, wo die an den unterschiedlichen Beinen 11, 12 des Nutztieres 10 zeitabhängig gemessenen Beschleunigungs- oder Neigungswinkeldatenverlaufskurven unterschiedlich sind, also unterschiedliche Höhen und/oder unterschiedliche Frequenzen und/oder unterschiedliche Homogenitäten aufweisen, dass hier an einem der Beine 11, 12 eine Anomalie oder gar eine Krankheit, wie beispielsweise eine Klauenkrankheit, vorliegt.

Werden Neigungswinkel erfasst, wird, beispielsweise im Falle von Fersenkrankheiten, durch die Bewegung des Beins 11, 12 ein anderer Neigungswinkeldatenverlauf als an dem Bein 11, 12 eines gesunden Tieres gemessen. Dadurch kann mittels eines Vergleichs des erfassten zeitabhängigen Neigungswinkeldatenverlaufs mit dem an einem gesunden Tier ermittelten und in der Datenbank 42 gespeicherten, zeitabhängigen Neigungswinkeldatenverlauf auf eine bestimmte Bein- oder Klauenkrankheit des Nutztieres 10 geschlossen werden.

## Patentansprüche

1. Anordnung (1a, 1a', 1b, 1c, 1c') zur Erkennung einer Anomalie oder einer Krankheit des Bewegungsapparates eines Nutztieres (10), **dadurch gekennzeichnet, dass** die Anordnung (1a, 1a', 1b, 1c, 1c') wenigstens eine, jeweils in einem Gehäuse (30) befindliche und jeweils an einem Bein (11, 12) des Nutztieres (10) befestigbare oder befestigte Sensoranordnung (3, 3'), die wenigstens einen zeitabhängig messenden Beschleunigungssensor (6) und/oder wenigstens einen zeitabhängig messenden Neigungssensor und eine Stromversorgungseinrichtung (5) aufweist, und eine mit der wenigstens einen Sensoranordnung (3) gekoppelte oder in dieser integrierte Datenverarbeitungseinrichtung (4) mit einem Beschleunigungs- und/oder Neigungswinkeldatenspeicher (41) und einer Datenbank (42) aufweist, in der vorbestimmte zeitabhängige Beschleunigungs- und/oder Neigungswinkeldatenverlaufskurven und/oder zeitabhängige Beschleunigungs- und/oder Neigungswinkeldifferenzverläufe vorbestimmten Zuständen des Bewegungsapparates von Nutztieren zugeordnet sind, wobei die Datenverarbeitungseinrichtung (4) ein Differenzbildungsmodul (43) zur Bildung von Beschleunigungs- und/oder Neigungswinkeldifferenzen zwischen aus aktuellen und früheren Beschleunigungs- und/oder Neigungswinkeldaten gebildeten Beschleunigungs- und/oder Neigungswinkeldatenverlaufskurven und ein Vergleichsmodul (44) zum Vergleich der jeweils aktuellen Beschleunigungs- und/oder Neigungswinkeldatenverlaufskurve und/oder eines aus den Beschleunigungs- und/oder Neigungswinkeldifferenzen ermittelten zeitabhängigen Beschleunigungs- und/oder Neigungswinkeldifferenzverlaufes mit den Zuständen des Bewegungsapparates von Nutztieren aus der Datenbank (42) aufweist.

2. Anordnung nach Anspruch 1, **dadurch gekennzeichnet, dass** der wenigstens eine zeitabhängig messende Beschleunigungssensor (6) ein dreidimensionaler Beschleunigungssensor und/oder der wenigstens eine Neigungssensor ein dreidimensional Neigungswinkel erfassender Neigungssensor ist.

3. Anordnung nach einem der vorhergehenden Ansprüche, **dadurch gekennzeichnet, dass** der wenigstens eine zeitabhängig messende Beschleunigungssensor (6) ein in einem Bereich von ± 0,1 g bis ± 40 g, mit einer Messauflösung von 8 bis 24 Bit messender Beschleunigungssensor ist und/oder der wenigstens eine Neigungssensor einen Messbereich von 0° bis 90° und eine Messauflösung von wenigstens 0,1° aufweist.

4. Anordnung nach einem der vorhergehenden Ansprüche, **dadurch gekennzeichnet, dass** die Anordnung (1a, 1b, 1c) zwei der Sensoranordnungen (3, 3') aufweist, die zur Befestigung jeweils an gegenüberliegenden Beinen (11, 12) des Nutztieres (10) vorgesehen sind.

5. Anordnung nach einem der vorhergehenden Ansprüche, **dadurch gekennzeichnet, dass** die wenigstens eine Sensoranordnung (3, 3') einen Drehgeschwindigkeitssensor (14) und/oder einen Kompasssensor (15) aufweist.

6. Anordnung nach einem der vorhergehenden Ansprüche, **dadurch gekennzeichnet, dass** die wenigstens eine Sensoranordnung (3, 3') einen Temperatursensor (16) aufweist.

7. Anordnung nach einem der vorhergehenden Ansprüche, **dadurch gekennzeichnet, dass** die wenigstens eine Sensoranordnung (3, 3') eine mit der Stromversorgungseinrichtung (5) und wenigstens Sensor der Sensoranordnung (3, 3') gekoppelte Stromversorgungsmanagementeinrichtung (8) aufweist, mit der eine Messaktivität wenigstens eines Sensors der wenigstens einen Sensoranordnung (3) stromsparend minimierbar ist.

8. Anordnung nach einem der vorhergehenden Ansprüche, **dadurch gekennzeichnet, dass** die Anordnung (1a, 1a', 1b, 1c, 1c') wenigstens eine mit der Datenverarbeitungseinrichtung (4) gekoppelte Leuchte (14, 15) aufweist.

9. Anordnung nach Anspruch 8, **dadurch gekennzeichnet, dass** die Anordnung wenigstens einen an dem Nutztier (10) angeordneten RFID-Chip (2) und wenigstens eine Kamera (18) aufweist, mit der wenigstens ein Signal der wenigstens einen Leuchte (14, 15) aufnehmbar und der RFID-Chip (2) auslesbar sind.

10. Verfahren zur Erfassung von Eigenschaften des Bewegungsapparates eines Nutztieres (10), **dadurch gekennzeichnet, dass** wenigstens eine jeweils in einem Gehäuse (30) befindliche Sensoranordnung (3), die wenigstens einen Beschleunigungssensor (6) und/oder wenigstens einen Neigungssensor und eine Stromversorgungseinrichtung (5) aufweist, jeweils an einem Bein (11, 12) des Nutztieres (10) befestigt wird, mit dem wenigstens einen Beschleunigungssensor (6) zeitabhängig Beschleunigungsdaten (a) gemessen werden und/oder mit dem wenigstens einen Neigungssensor zeitabhängig Neigungswinkeldaten (ϕ) gemessen werden, in einer Datenverarbeitungseinrichtung (4) aus dem zeitlichen Verlauf der gemessenen Beschleunigungs- und/oder Neigungswinkeldaten (a, ϕ) Beschleunigungsdaten- und/oder Neigungswinkeldatenverlaufskurven gebildet werden, aus aktuellen der Beschleunigungsdaten- und/oder Neigungswinkeldatenverlaufskurven und früheren der Beschleunigungsdaten- und/oder Neigungswinkeldatenverlaufskurven Beschleunigungs- und/oder Neigungswinkeldifferenzen gebildet werden, und eine jeweils aktuelle Beschleunigungsdaten- und/oder Neigungswinkeldatenverlaufskurve und/oder ein aus den Beschleunigungs- und/oder Neigungswinkeldifferenzen ermittelter zeitabhängiger Beschleunigungs- und/oder Neigungswinkeldifferenzverlauf mit in einer Datenbank (42) abgelegten, vorbestimmten zeitabhängigen Beschleunigungsdaten- und/oder Neigungswinkeldatenverlaufskurven und/oder zeitabhängigen Beschleunigungs- und/oder Neigungswinkeldifferenzverläufen verglichen wird/werden.

11. Verfahren nach Anspruch 10, **dadurch gekennzeichnet, dass** von zwei der Sensoranordnungen (3) an zwei unterschiedlichen Beinen (11, 12) des Nutztieres (10) zeitabhängig Beschleunigungs- und/oder Neigungswinkeldaten gemessen werden, in der Datenverarbeitungseinrichtung (4) aus dem zeitlichen Verlauf der gemessenen Beschleunigungs- und/oder Neigungswinkeldaten (a, ϕ) erste und zweite Beschleunigungsdaten- und/oder Neigungswinkeldatenverlaufskurven gebildet werden, eine zeitabhängige Differenz zwischen der ersten und der zweiten Beschleunigungsdaten- und/oder Neigungswinkeldatenverlaufskurve ermittelt und durch Vergleich des zeitlichen Verlaufes dieser zeitabhängigen Differenz mit einer früher ermittelten zeitabhängigen Differenz von ersten und zweiten Beschleunigungsdaten- und/oder Neigungswinkeldatenverlaufskurven von an dem Nutztier (10) gemessenen Beschleunigungs- und/oder Neigungswinkeldaten ein Zustand des Bewegungsapparates des Nutztieres (10) bestimmt oder spezifiziert wird.

12. Verfahren nach Anspruch 10 oder 11, **dadurch gekennzeichnet, dass** der wenigstens eine Beschleunigungssensor (6) und/oder der wenigstens eine Neigungssensor mit einer Messfrequenz von 0,5 Hz bis 2.000 Hz misst/messen.

13. Verfahren nach einem der Ansprüche 10 bis 12, **dadurch gekennzeichnet, dass** eine Messfrequenz des wenigstens einen Beschleunigungssensors (6) und/oder des wenigstens einen Neigungssensors in Abhängigkeit von den gemessenen Beschleunigungs- und/oder Neigungswinkeldaten (a, ϕ) variiert wird und/oder Messungen durch den wenigstens einen Beschleunigungssensor (6) und/oder den wenigstens einen Neigungssensor in zeitlichen Intervallen erfolgen.

14. Verfahren nach einem der Ansprüche 10 bis 13, **dadurch gekennzeichnet, dass** durch die Datenverarbeitungseinrichtung (4) wenigstens eine an der wenigstens einen Sensoranordnung (3) angeordnete Leuchte (14, 15) angesteuert wird, die von wenigstens einer Kamera (18) aufgenommen und einem RFID-Chip (2) des Nutztieres (10) zugeordnet wird.
